Europäisches Patentamt

European Patent Office

Office européen des brevets

(19)

(11) Numéro de publication : **0 397 566 B1**

(12) **FASCICULE DE BREVET EUROPEEN**

(45) Date de publication du fascicule du brevet :
04.11.92 Bulletin 92/45

(21) Numéro de dépôt : **90401235.8**

(22) Date de dépôt : **10.05.90**

(51) Int. Cl.⁵ : **F23R 3/00,** F23R 3/60,
F02K 1/82

(54) **Chemise de protection thermique pour canal de post-combustion ou de transition d'un turboréacteur.**

(30) Priorité : **11.05.89 FR 8906174**

(43) Date de publication de la demande :
**14.11.90 Bulletin 90/46**

(45) Mention de la délivrance du brevet :
**04.11.92 Bulletin 92/45**

(84) Etats contractants désignés :
**DE FR GB**

(56) Documents cités :
**FR-A- 1 221 234**
**FR-A- 1 435 410**
**FR-A- 1 458 204**
**FR-A- 2 271 405**
**GB-A- 781 923**
**GB-A- 2 087 065**
**US-A- 4 614 082**
**US-A- 4 773 227**

(73) Titulaire : **SOCIETE NATIONALE D'ETUDE ET DE CONSTRUCTION DE MOTEURS D'AVIATION, "S.N.E.C.M.A."**
**2, Boulevard du Général Martial Valin**
**F-75015 Paris (FR)**

(72) Inventeur : **Jourdain, Gérard, Ernest, André**
**4 Résidence l'Arcadie, Saintry sur Seine**
**F-91100 Corbeil-Essonnes (FR)**
Inventeur : **Loubet, Marc Georges**
**87-3 Chemin des Acacias**
**F-77176 Nandy (FR)**

(74) Mandataire : **Moinat, François et al**
**S.N.E.C.M.A. Service des Brevets Boîte Postale 81**
**F-91003 Evry Cédex (FR)**

EP 0 397 566 B1

Jouve, 18, rue Saint-Denis, 75001 PARIS

## Description

La présente invention concerne des chemises de protection thermique pour canaux de post-combustion ou canaux de transition de turboréacteurs d'aviation.

La majorité des turboréacteurs supersoniques sont équipés d'un dispositif de post-combustion. Celui-ci se présente sous la forme d'un canal situé entre la turbine et la tuyère dans lequel des rampes d'injection apportent un supplément de carburant qui permet de parfaire la combustion des hydrocarbures non brûlés dans la chambre de combustion et d'élever la température des gaz d'éjection. L'apport de carburant est très important et l'on atteint des températures élevées de l'ordre de 2100°K (température moyenne d'éjection) ; localement, ces températures peuvent atteindre 2300°K.

Pour les turboréacteurs équipés de tuyères axisymétriques, le canal est de forme cylindrique ; il est raccordé à son amont à la bride aval du carter d'échappement et à son aval directement à la virole amont de la tuyère. Lorsque les turboréacteurs sont équipés de tuyères bidimensionnelles, le canal de post-combustion est raccordé à son aval à un canal de transition qui permet de passer d'une section circulaire à une section rectangulaire ou carrée.

Compte tenu des températures régnant dans ces canaux, il est indispensable de les protéger par une chemise de protection thermique. Cette chemise est maintenue espacée de la paroi interne du canal et coaxialement à celle-ci par des attaches coulissantes. Un débit d'air de refroidissement qui peut être de l'air secondaire dans le cas d'un turboréacteur double flux, circule entre la paroi interne du canal et la paroi externe de la chemise.

Le document FR-A-1 458 204 au nom de la demanderesse décrit une chemise de protection réalisée sous la forme d'une structure monobloc à paroi ondulée. Elle est reliée au canal par des points fixes et des points coulissants lui permettant de se dilater en fonctionnement, la dilatation longitudinale se faisant par les points coulissants et la dilatation diamétrale par la déformation des ondulations.

Le document FR-A-2 574 859 prévoit une chemise de protection comportant divers moyens de refroidissement : une partie est à double paroi refroidie par impact et par convection tandis que la partie aval comporte des replis de formation de film de refroidissement par convection interne. Comme le précédent, ce dispositif présente l'inconvénient d'être monobloc.

Dans le domaine voisin mais différent de la réalisation des brûleurs de chambre de combustion de turboréacteurs, on a déjà réalisé des structures de chambre de combustion à double paroi, la paroi externe structurelle supportant des panneaux internes formant la paroi chaude lesdits panneaux étant agencés sous forme de tuiles à recouvrement. Les documents US-A- 4 614 082, FR-A-2 567 250, GB-A-2 087 065 ou encore US-A-4 773 227 en montrent des modes de réalisation.

La présente invention vise à réaliser des chemises de protection thermique utilisant le concept de tuiles à recouvrement dont il a été question ci-dessus, mais dans lequel lesdites tuiles ne sont pas fixées séparément sur une paroi structurale mais sont fixées entre elles pour réaliser une structure de protection thermique complète et séparable en tout, du canal dans lequel ladite structure sera disposée.

L'invention a donc pour objet une chemise de protection thermique pour canal de post-combustion ou de transition d'un turboréacteur conformée en un ensemble structural apte à être fixé sur le carter externe du canal et constituée d'un ensemble de tuiles se chevauchant latéralement et longitudinalement, les rangées de tuiles de deux rangs successifs étant décalées d'une demi-largeur de tuile, et dans laquelle chaque tuile comporte au moins deux fenêtres amont et au moins deux pontets découpés ou emboutis en relief dans leur partie aval, les fenêtres amont d'une des tuiles composant l'anneau aval étant encastrées dans les pontets aval de deux tuiles adjacentes formant l'anneau amont tandis que des étriers d'assemblage placés radialement à l'extérieur de la tuile aval et coopérant au travers des fenêtres avec les pontets des deux tuiles adjacentes amont assurent la fixation de l'ensemble sur le carter externe du canal.

Ainsi, l'invention permet de réaliser un tout structural dans lequel chaque tuile peut néanmoins avoir une certaine liberté de dilatation radiale et axiale et circonférentielle par rapport aux tuiles voisines.

D'autres caractéristiques de l'invention et son mode de réalisation et d'assemblage seront explicités en regard des planches annexées parmi lesquelles :

- la figure 1 est une vue en coupe longitudinale de la structure selon l'invention assemblée et fixée sur un canal chaud de turboréacteur avec interposition d'un anneau raidisseur ;
- la figure 2 est une vue de dessus de la chemise de protection thermique de la figure 1 montrée sans l'anneau raidisseur ;
- la figure 3 montre en partie gauche une demi-coupe selon AA de la figure 1 et en partie droite une demi-coupe selon BB de la figure 1 ;
- la figure 3a est le détail C de la figure 3, à plus grande échelle ;
- la figure 4 est une vue en perspective d'une tuile selon l'invention ;
- la figure 5 est une vue en perspective de dessus depuis l'amont du mode de réalisation des figures 1 à 3, avec une barrette de verrouillage d'un type particulier apte à améliorer la circulation d'air de refroidissement ;
- la figure 6 représente en perspective selon la même vue que la figure 5, une variante de réalisation dans laquelle les pontets et les étriers sont modifiés ;

-la figure 7 montre une tuile modifiée pour être utilisée pour former la première rangée amont de la chemise de protection thermique ;

-la figure 8 montre une tuile modifiée pour être utilisée dans la dernière rangée aval de la chemise de protection thermique ;

-la figure 9 montre une vue de dessus de la chemise de protection assemblée indiquant le système d'étanchéité entre les tuiles. Dans cette vue, les moyens de fixation des tuiles (pontets, étriers, barrettes) n'ont pas été représentés ;

-la figure 10 est une vue en section selon DD de la figure 9 ;

-la figure 11 est une section selon EE de la figure 9.

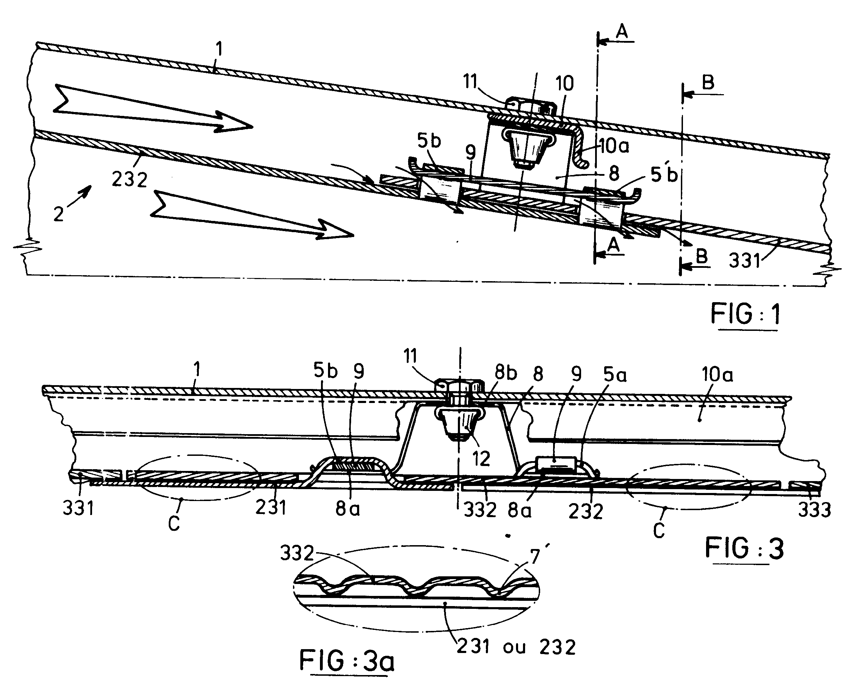

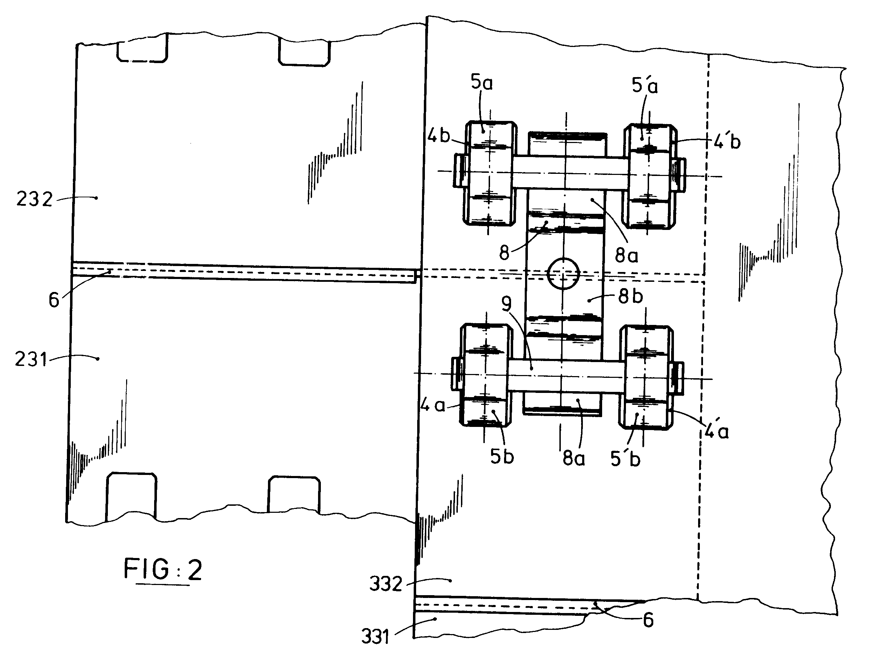

Si l'on se réfère aux figures 1 à 5, on voit que le canal 1 de post-combustion ou de transition entre un canal PC et une tuyère bidimensionnelle est protégé intérieurement par une chemise de protection globalement référencée 2 et formée de tuiles.

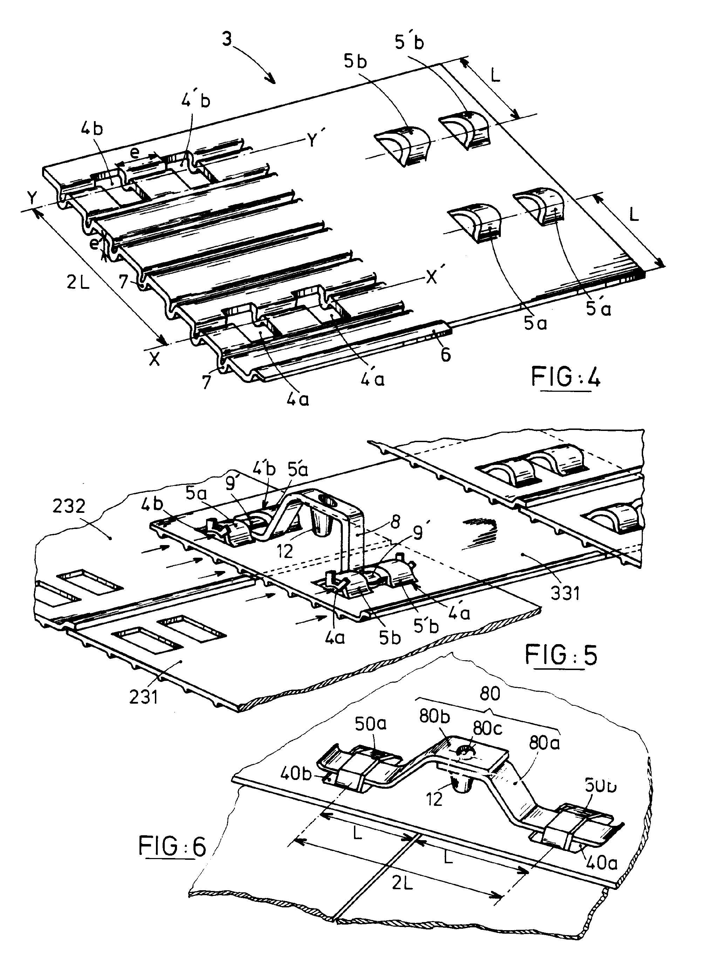

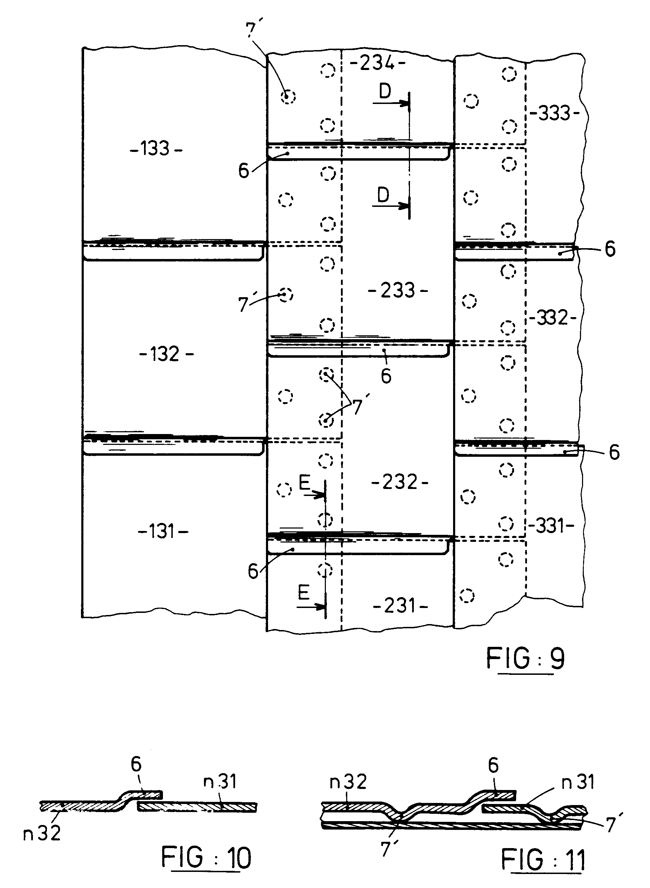

Dans les figures 1 à 11, les tuiles seront référencées selon la convention suivante : toutes les tuiles porteront un nombre de trois chiffres : le chiffre des centaines sera égal au rang de l'anneau de la chemise dans lequel la tuile référencée est incorporée ; le chiffre des dizaines sera toujours le chiffre 3 désignant chaque tuile prise individuellement (telle que représentée par exemple à la figure 4) et le chiffre des unités sera caractéristique de la place de la tuile dans chaque anneau.

Les tuiles du premier anneau amont seront ainsi référencées 131 et suivantes, celles du deuxième anneau 231 et suivantes et celles du dernier anneau, le plus aval, n31 et suivantes.

La figure 4 montre une tuile 3, isolée de l'ensemble, le bord amont étant représenté à gauche de la figure et le bord aval à droite, la tuile étant vue de dessus.

Sur le mode de réalisation représenté ici, la tuile comporte sur sa moitié amont deux paires de fenêtres respectivement 4a, 4'a et 4b, 4'b.

Les fenêtres 4a et 4'a (respectivement 4b, 4'b) sont disposées sur un même axe longitudinal XX' (respectivement YY) et sont séparées par un espace "e". Les fenêtres 4a, 4'a et les fenêtres 4b, 4'b sont disposées symétriquement par rapport à l'axe longitudinal médian et sont séparées par une largeur 2L.

Deux paires de pontets respectivement 5a, 5'a et 5b, 5'b sont réalisées dans la moitié aval de chaque tuile. Chaque pontet est embouti (si la tuile est réalisée en matériau métallique) on venu de moulage (si la tuile est en matériau composite ou céramique) et dépasse de la face supérieure de la tuile sous la forme d'un demi-cylindre. Les pontets 5a, 5'a, respectivement 5b, 5'b sont espacés du bord gauche (respectivement du bord droit) de la tuile d'une largeur L.

Chaque tuile comporte également sur environ la moitié amont d'un de ses bords latéraux une bande de recouvrement 6 qui viendra recouvrir le bord adjacent de la tuile voisine lors de l'assemblage.

En outre chaque tuile comporte sur sa face de dessous et dans sa partie amont seulement soit des ondulations longitudinales embouties 7 d'épaisseur constante telles que représentées à la figure 4, soit des bossages 7' ou picots, disposées en quinconce, comme représenté à la figure 3a de façon à ce que, lorsque les tuiles sont mises en place, l'amont d'une tuile recouvrant la partie aval de deux tuiles de l'anneau amont adjacent, un espace "é" soi conservé radialement entre la face externe des tuiles amont et la face interne de la tuile aval afin que l'air relativement froid circulant entre la chemise 2 et le carter 1 puisse pénétrer à l'intérieur de la chemise pour former le long de la paroi intérieure de celle-ci un film pariétal de refroidissement amont ainsi qu'on le verra plus loin.

Sur les figures 1 à 3 on a représenté les tuiles de deux anneaux successifs assemblés, par exemple le deuxième et le troisième anneau. Sur les figures 1 et 2 on voit ainsi que les tuiles 231 et 232 de l'anneau amont sont recouvertes à leur partie aval par la tuile 332 de l'anneau aval et sont disposées de telle sorte que les pontets aval 5b, 5'b de la tuile 231 prennent place dans les fenêtres amont 4a, 4'a de la tuile 331 tandis que les pontets aval 5a, 5'a de la tuile 232 traversent les fenêtres 4b, 4'b de la même tuile aval 331.

Des étriers d'assemblage 8 en forme de U renversé comportant des ailes d'extrémité 8a parallèles à leur partie médiane 8b sont alors placés extérieurement à la tuile 332 et transversalement de telle sorte qu'une des ailes 8a soit placée dans l'espace "e" séparant les pontets 5b, 5'b de la tuile 231 dépassant au travers des fenêtres 4a, 4'a de la tuile 332, tandis que la seconde aile 8a est logée entre les pontets 5a, 5'a de la tuile 232 dépassant des fenêtres 4b, 4'b de la même tuile 332. Deux barrettes de verrouillage 9 sont alors glissées longitudinalement sous les pontets 5b et 5'b (respectivement 5a et 5'a).

Une fois toutes les tuiles 331 à 33n de l'anneau aval ainsi solidarisées à celles 231 à 23n de l'anneau amont, un anneau raidisseur 10 transversal est placé sur les parties médianes de tous les étriers 8, sur lesquels il est fixé par des vis 11 engagées par l'extérieur du carter 1 dans des écrous freins 12 encagés portés par les parties médianes 8b de chaque étrier 8.

Les vis 11 servent donc ainsi à la fixation de la chemise 2 sur le carter 1.

Les anneaux raidisseurs 10 comportent chacun une aile aval 10a repliée radialement vers l'intérieur du canal pour former en amont de chaque anneau un diaphragme aérodynamique apte à mettre sous pression l'air secondaire circulant entre la chemise 2 et le carter 1 dans la zone amont de l'anneau formé par les tuiles 331 à 33n.

Du fait de l'existence des picots ou ondulations 7, 7', les tuiles amont 231, 232 et aval 332 sont espacées de l'épaisseur e' desdites ondulations et l'air secondaire mis en pression par le diaphragme formé par l'aile 10a s'infiltre entre les tuiles 231, 232 et la tuile 332 pour former un courant de refroidissement par convection entres lesdites tuiles. L'air peut également passer sous les barrettes de verrouillage 9. L'air relativement froid ayant circulé entre les tuiles et sous les barrettes peut pénétrer à l'intérieur de la chemise de protection thermique 2 par les fenêtres 4a, 4'a 4b, 4'b pour former le long de la paroi interne de la chemise un film pariétal de refroidissement.

La figure 5 montre en perspective l'assemblage ainsi formé pour réaliser une chemise de protection selon l'invention. Dans cette figure, toutes les pièces représentées sont conformes à la description qui vient d'être faite à l'exception des barrettes de verrouillage 9' qui ont ici une section semi-circulaire pour améliorer l'introduction d'air de refroidissement vers l'intérieur des tuiles pour former le film pariétal de refroidissement de la chemise 2. En outre, dans les figures 5 à 8, on a représenté à titre de variante des picots ou ondulations 7, 7' des surépaisseurs longitudinales en relief, sans que cela change le principe de ventilation des tuiles. Dans la variante représentée à la figure 6, on a remplacé les paires de pontets aval par des pontets longitudinaux simples 50a, 50b.

Les paires de fenêtres de la version précédente sont alors remplacées par des fenêtres simples 40a, 40b. Les écartements des fenêtres entre elles et des pontets par rapport aux bords des tuiles sont les mêmes que dans la variante précédente.

Dans ce cas pour pouvoir insérer l'étrier 80, celui-ci doit alors être réalisé sous la forme de deux demi-étriers 80a, 80b que l'on engage respectivement sous les pontets 50b et 50a. Les deux demi étriers possèdent chacun une surface centrale de recouvrement, l'une étant munie d'un orifice 80c tandis que l'autre supporte l'écrou encagé 12. Les deux demi-étriers sont alors solidarisés entre eux et à l'anneau raidisseur 10 par les vis 11.

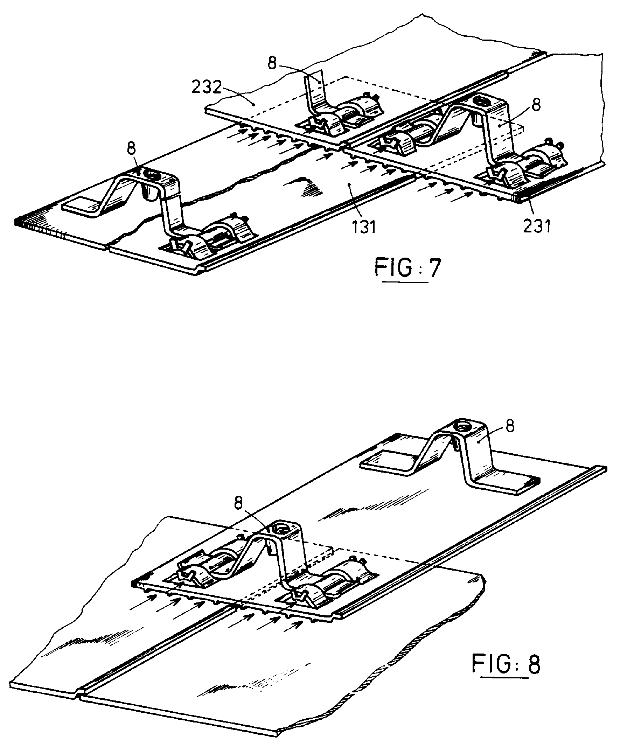

La figure 7 montre une tuile du rang le plus amont, fixée aux tuiles du second rang. Dans la partie gauche de la tuile amont, on a représenté une variante de réalisation où la tuile 13n est métallique. Dans ce cas, la tuile 13n ne comporte pas de fenêtre amont mais un étrier soudé ou riveté. Cet étrier est destiné à la liaison des tuiles 13n avec le canal de post-combustion. Cette liaison est réalisée par des vis traversant le canal et venant se bloquer dans les écrous freins 12 des étriers. Les tuiles composant cet anneau n'étant pas recouvrantes à l'amont, elles ne possèdent pas de bossages internes, la partie aval des tuiles est identique à celle des tuiles intermédiaires.

Dans la partie droite de la tuile amont 13n de cette figure, on a représenté une variante pour une tuile en composite. Dans ce cas, la tuile pourra comporter des pontets amont et l'étrier amont sera solidarisé à la tuile par une barrette de verrouillage comme pour les anneaux aval.

A la figure 8, on a représenté une tuile de l'anneau aval. Les tuiles composant cet anneau n'étant pas recouvertes à l'aval, ne possèdent pas de pontets dans cette zone mais un étrier de fixation est disposé à la partie aval de façon identique aux étriers de l'anneau amont. La fixation au canal est assurée également par des vis bloquées dans les écrous-freins 12 des étriers 8. La partie amont des tuiles de cet anneau est identique à celle des tuiles des anneaux plus en amont.

Il faut encore ajouter à cette description que la largeur des étriers est calculée de façon à laisser entre lesdits étriers et les pontets ou les paires de pontets correspondants un jeu permettant la dilatation dans le sens longitudinal de l'assemblage de tuiles formant ladite chemise de protection thermique.

De même, une dilatation dans le sens radial est permise parce que les anneaux sont relativement libres radialement les uns par rapport aux autres, la hauteur des bossages formant les pontets étant calculée avec un jeu suffisant pour permettre cette dilatation.

Une chemise de protection du type ici décrit présente pour avantage le fait que l'on peut remplacer individuellement chaque tuile qui paraîtrait défectueuse en cours de fonctionnement et qu'on peut le faire sur une base aérienne sans intervention délicate en atelier, qui nécessiterait une immobilisation longue du moteur et de l'avion qui l'utilise.

En outre, le volant de pièces de rechanges nécessaires est considérablement réduit par la structure modulaire de la chemise.

## Revendications

1. Chemise de protection thermique pour canal (1) de post-combustion ou de transition d'un turboréacteur conformée en un ensemble structural apte à être fixée sur le carter externe du canal (1) et en un ensemble de tuiles (13n, 23n, 33n ...) se chevauchant latéralement et longitudinalement, les rangées de tuiles de deux rangs successifs étant décalées d'une demi-largeur de tuiles, caractérisé en ce que chaque tuile (3) comporte au moins deux fenêtres amont (4a, 4'a, 4b, 4'b, 40a, 40b) et au moins deux pontets (5a, 5'a, 5b, 5'b, 50a, 50b) découpés ou emboutis en relief dans leur partie aval, les fenêtres amont (4a, 4'a ; respectivement 4b, 4'b) d'une des tuiles comportant l'anneau aval étant encastrées dans les pontets aval (5b, 5'b ; respectivement 5a, 5'a) de deux tuiles adjacentes formant l'anneau amont tandis que des étriers d'assemblage (8, 80) placés radialement à l'extérieur de la tuile aval et coopérant au travers des fenêtres avec les pontets des deux tuiles adjacentes amont assurent la fixation de l'ensemble sur le carter externe (1) du canal.

2. Chemise de protection thermique selon la revendication 1, caractérisée en ce que chaque tuile comporte d'une part deux fenêtres amonts (40a, 40b) symétriques par rapport à l'axe longitudinal médian de la tuile et espacées d'une largeur 2L et d'autre part deux pontets longitudinaux aval (50a, 50b), chaque pontet étant écarté du bord de la tuile d'une largeur L, en ce que à chaque fenêtre amont (40a, respectivement 40b) d'une tuile correspond un seul pontet (50b, respectivement 50a) de la tuile amont correspondante et en ce que l'étrier d'assemblage (80) de deux tuiles aval et de ladite tuile amont est constitué de deux demi-étriers (80a, 80b) chacun engagé transversalement sous un des pontets (50b, 50a) des tuiles amont adjacentes, les deux demi-étriers possédant chacun une surface centrale de recouvrement munie d'un orifice (80C), les deux demi-étriers étant fixés ensemble au moyen d'une vis (11) disposée dans lesdits orifices.

3. Chemise de protection thermique selon la revendication 1, caractérisée en ce que chaque tuile comporte d'une part deux paires de fenêtres amont (4a, 4'a ; 4b, 4'b), les fenêtres de chaque paire étant disposées sur un même axe longitudinal, lesdits deux axes étant symétriques par rapport à l'axe longitudinal médian et écartés d'une largeur 2L, et d'autre part deux paires de pontets (5b, 5'b ; 5a, 5'a) transversaux, les pontets de chaque paire étant disposés l'un derrière l'autre sur un même axe longitudinal écarté du bord de la tuile d'une largeur L, et en ce que les étriers d'assemblage (8) sont monoblocs et ont leurs ailes d'extrémité (8a) disposées transversalement entre chaque paire de pontets transversaux (5b, 5'b et 5a, 5'a) et en ce qu'une barrette de verrouillage (9, 9') glissée longitudinalement sous les pontets (5b, 5'b, respectivement 5a, 5'a) d'une même paire et dessus l'aile d'extrémité (8a) de l'étrier (8) assurent le verrouillage dudit étrier (8) sur les tuiles ainsi assemblées.

4. Chemise de protection thermique selon la revendication 1 caractérisée en ce que les barrettes de verrouillage (9') ont une section semi-circulaire permettant l'introduction d'air de refroidissement radialement vers l'intérieur des tuiles pour former un film pariétal de refroidissement.

5. Chemise de protection thermique selon l'une quelconque des revendications 1 à 4 caractérisée en ce que la partie amont de chaque tuile possède, dans la zone où elle recouvre une tuile amont, des ondulations (7') ou des picots (7) assurant un écartement desdites tuiles se recouvrant pour permettre l'introduction depuis l'amont d'air secondaire vers la face radialement interne des tuiles aval pour former un film pariétal de refroidissement.

6. Chemise de protection thermique selon l'une quelconque des revendications 1 à 5, caractérisée en ce qu'elle comprend des anneaux raidisseurs (10) circulaires transversaux reliant entre eux tous les étriers (8) d'une même rangée de tuiles, étriers sur lesquels ils sont fixés par des vis (11) engagées dans des écrous freins (12) portés par la partie médiane de chaque étrier (8).

7. Chemise de protection thermique selon la revendication 6, caractérisée en ce que les anneaux raidisseurs (10) comportent une aile aval (10a) circulaire repliée vers l'intérieur du canal pour former en amont de chaque anneau un diaphragme de mise en pression de l'air de refroidissement.

8. Chemise de protection thermique selon l'une des revendications 6 ou 7 caractérisée en ce qu'elle est fixée à l'intérieur du carter (1) du canal au moyen de vis (11) montées par l'extérieur dudit canal et bloquées par des écrou prisonniers (12) solidaires des étriers (8).

9. Chemise de protection thermique selon l'une quelconque des revendications 1 à 8 caractérisée en ce que la hauteur des bossages formant les pontets (5, 50) est calculée avec un jeu suffisant pour permettre la dilatation dans le sens radial de l'assemblage des tuiles formant ladite chemise de protection thermique.

10. Chemise de protection thermique selon l'une quelconque des revendications 1 à 9 caractérisée en ce que la largeur de l'étrier (8) est calculée de façon à laisser entre ledit étrier et les pontets ou les paires de pontets correspondant un jeu permettant la dilatation dans le sens longitudinal de l'assemblage des tuiles formant ladite chemise de protection thermique.

**Patentansprüche**

1. Wärmeschutzmantel für einen Nachbrenner oder ein Zwischenstück (1) in einem Turbostrahltriebwerk, bestehend aus einer an dem Außengehäuse des Kanals befestigbaren strukturellen Einheit und einer Einheit von einander seitlich und in Längsrichtung überlappenden Platten (13n, 23n, 33n ...), wobei die Platten jeweils zweier aufeinanderfolgender Reihen um die halbe Breite einer Platte gegeneinander versetzt sind, **dadurch gekennzeichnet,** daß jede Platte (3) in ihrem stromaufwärtigen Teil wenigstens zwei Fenster (4a, 4′a, 4b, 4′b, 40a, 40b) und in ihrem stromabwärtigen Teil wenigstens zwei ausgestanzte oder herausgedrückte Bügelstege (5a, 5′a, 5b, 5′b, 50a, 50b) aufweist , wobei die stromaufwärtigen Fenster (4a, 4′a bzw. 4b, 4′b) einer der den stromabwärtigen Ring bildenden Platten in die stromabwärtigen Bügelstege (5b, 5′b bzw. 5a, 5′a) zweier benachbarter Exemplare der den stromaufwärtigen Ring bildenden Platten eingespannt sind, und daß radial außerhalb der stromabwärtigen Platte angeordnete und durch Fenster mit den Bügelstegen der beiden benachbarten stromaufwärtigen Platten zusammenwirkende Montagebügel (8, 80) die Befestigung der Einheit an dem Außengehäuse (1) des Kanals sichern.

2. Wärmeschutzmantel nach Anspruch 1, dadurch gekennzeichnet, daß jede Platte einerseits zwei symmetrisch zu ihrer Längsmittelachse angeordnete und um einen Abstand 2L voneinander entfernte stromaufwärtige Fenster (40a, 40b) und andererseits zwei in Längsrichtung orientierte stromabwärtige Bügelstege (50a, 50b) aufweist, wobei jeder Bügelsteg von dem Rand der Platte einen Abstand L hat, daß jedem stromaufwärtigen Fenster (40a bzw, 40b) einer Platte ein einziger Bügelsteg (50b bzw. 50a) der betreffenden stromaufwärtigen Platte entspricht, und daß der Bügel (80) zum Montieren zweier stromabwärtiger Platten und der genannten stromaufwärtigen Platte aus zwei Halbbügeln (80a, 80b) besteht, deren jeder in transversaler Richtung unter einen der Bügelstege (50a, 50b) der benachbarten stromaufwärtigen Platten greift, wobei jeder der beiden Halbbügel eine mit einer Öffnung (80c) versehene zentrale Überlappungsfläche besitzt und die beiden Halbbügel durch eine in diesen Öffnungen angeordnete Schraube (11) gemeinsam fixiert sind.

3. Wärmeschutzmantel nach Anspruch 1, dadurch gekennzeichnet, daß jede Platte einerseits zwei Paare von stromaufwärtigen Fenstern (4a, 4′a; 4b,4′b) aufweist, wobei die Fenster jedes Paares auf derselben Längsachse angeordnet sind und die beiden Achsen symmetrisch zur Längsmittelachse verlaufen und in einem gegenseitigen Abstand 2L angeordnet sind, und andererseits zwei Paare von transversalen Bügelstegen (5b, 5′b; 5a, 5′a), wobei die Bügelstege jedes dieser Paare hintereinander auf ein und derselben Längsachse angeordnet sind, die von dem Rand der Platte einen Abstand L hat, daß die Montagebügel (8) einstückig ausgebildet sind und ihre endseitigen Schenkel (8a) transversal zwischen jedem Paar von transversalen Bügelstegen (5b, 5′b und 5a, 5′a) angeordnet sind, und daß ein in Längsrichtung unter die Bügelstege (5b, 5′b bzw. 5a, 5′a) ein und desselben Paares und unter den endseitigen Schenkel (8a) des Montagebügels (8) geschobener Verriegelungsstab (9, 9′) die Verriegelung des Montagebügels (8) an den auf diese Weise montierten Platten sichert.

4. Wärmeschutzmantel nach Anspruch 1, dadurch gekennzeichnet, daß die Verriegelungstäbe (9′) einen halbkreisförmigen Querschnitt haben, der zur Ausbildung eines Wandkühlungsfilms das radiale Einführen von Kühlluft ins Innere der Platten ermöglicht.

5. Wärmeschutzmantel nach einem der Ansprüche 1 bis 4, dadurch gekennzeichnet, daß in dem stromaufwärtigen Teil jeder Platte in der Zone, in der es eine stromabwärtige Platte überlappt, Wellenriefen (7′) oder Keile (7) vorgesehen sind, die einen Abstand zwischen den einander überlappenden Platten herstellen, um das Einleiten von sekundärer Luft von der stromaufwärtigen Seite auf die radial innere Fläche der stromabwärtigen Platten zur Ausbildung eines Wandkühlungsfilms zu ermöglichen.

6. Wärmeschutzmantel nach einem der Ansprüche 1 bis 5, dadurch gekennzeichnet, daß kreisförmige transversale Versteifungsringe (10) vorgesehen sind, die alle Montagebügel (8) einer Reihe von Platten miteinander verbinden, wobei sie an diesen Montagebügeln mit Schrauben (11) befestigt sind, die in von dem mittleren Teil jedes Montagebügels (8) getragene Sicherungsmuttern (12) eingreifen.

7. Wärmeschutzmantel nach Anspruch 6, dadurch gekennzeichnet, daß die Versteifungsringe (10) einen zum Innenraum des Kanals hin abgewinkelten kreisförmigen stromabwärtigen Flügel (10a) aufweisen, der auf der stromaufwärtigen Seite jedes Ringes einen Staurand bildet, durch den Kühlluft mit Druck beaufschlagt wird.

8. Wärmeschutzmantel nach einem der Ansprüche 6 oder 7, dadurch gekennzeichnet, daß er im Innern des Gehäuses (1) des Kanals mit Hilfe von Schrauben befestigt ist, die vom Außenraum des Kanals aus montiert und durch mit den Montagebügeln (8) fest verbundene Annietmuttern (12) blockiert sind.

9. Wärmeschutzmantel nach einem der Ansprüche 1 bis 8, dadurch gekennzeichnet, daß die Höhe der die Bügelstege (5, 50) bildenden Vorsprünge mit einem genügend großen Spiel berechnet ist, um die radiale Ausdehnung der den Wärmeschutzmantel bildenden Einheit von Platten zu ermöglichen.

**10.** Wärmeschutzmantel nach einem der Ansprüche 1 bis 9, dadurch gekennzeichnet, daß die Breite des Montagebügels (8) so berechnet ist, daß zwischen ihm und den betreffenden Bügelstegen oder Paaren von Bügelstegen ein Spiel belassen ist, das die Ausdehnung der den Wärmeschutzmantel bildenden Einheit von Platten in Längsrichtung ermöglicht.

## Claims

**1.** Heat shield shroud for the reheat or transition jetpipe (1) of a jet engine, which shroud is shaped as a structural assembly adapted to be mounted on the outer casing of the jetpipe (1) and as an assembly of tiles (13n, 23n, 33n ...) overlapping one another laterally and longitudinally, the rows of tiles of two successive ranks being offset by a tile half-width, characterised in that each tile (3) comprises at least two upstream windows (4a, 4′a, 4b, 4′b, 40a, 40b) and at least two bridging pieces (5a, 5′a, 5b, 5′b, 50a, 50b) cut out or stamped in relief in their downstream part, the upstream windows (4a, 4′a; 4b, 4′b respectively) of one of the tiles comprising the downstream ring, being inserted into the downstream bridging pieces (5b, 5′b; 5a, 5′a respectively) of two adjacent tiles forming the upstream ring whereas assembly stirrups (8, 80) placed radially on the outside of the downstream tile and interacting through the windows with the bridging pieces of the two upstream adjacent tiles ensure the mounting of the assembly on the outer casing (1) of the jetpipe.

**2.** Heat shield shroud according to Claim 1, characterised in that each tile comprises on the one hand two upstream windows (40a, 40b) symmetrical about the central longitudinal axis of the tile and spaced apart by a width 2L and on the other hand two downstream longitudinal bridging pieces (50a, 50b), each bridging piece being separated from the edge of the tile by a width L, in that to each upstream window (40a, 40b respectively) of one tile corresponds a single bridging piece (50b, 50a respectively) of the corresponding upstream tile and in that the stirrup (80) for assembly of two downstream tiles and of the said upstream tile is constituted by two half-stirrups (80a, 80b) each engaged transversely under one of the bridging pieces (50b, 50a) of the adjacent upstream tiles, the two half-stirrups each possessing an overlapping central area provided with an aperture (80c), the two half-stirrups being mounted together by means of a screw (11) disposed in the said apertures.

**3.** Heat shield shroud according to Claim 1, characterised in that each tile comprises on the one hand two pairs of upstream windows (4a, 4′a; 4b, 4′b), the windows of each pair being disposed on a same longitudinal axis, the said two axes being symmetrical about the central longitudinal axis and separated by a width 2L, and on the other hand two pairs of transverse bridging pieces (5b, 5′b; 5a, 5′a), the bridging pieces of each pair being disposed one behind the other on a same longitudinal axis separated from the edge of the tile by a width L, and in that the assembly stirrups (8) are monobloc and have their end wings (8a) disposed transversely between each pair of transverse bridging pieces (5b, 5′b and 5a, 5′a) and in that a locking bar (9, 9′) slid longitudinally under the bridging pieces (5b, 5′b; 5a, 5′a respectively) of one same pair and above the end wing (8a) of the stirrup (8) ensures the locking of the said stirrup (8) on the tiles thus assembled.

**4.** Heat shield shroud according to Claim 1 characterised in that the locking bars (9′) have a semi-circular section permitting the admission of cooling air radially towards the inside of the tiles so as to form a parietal cooling film.

**5.** Heat shield shroud according to any one of Claims 1 to 4, characterised in that the upstream part of each tile possesses, in the zone where it overlaps an upstream tile, corrugations (7′) or points (7) ensuring a separation of the said overlapping tiles so as to permit the admission from upstream of secondary air towards the radially internal surface of the downstream tiles so as to form a parietal cooling film.

**6.** Heat shield shroud according to any one of Claims 1 to 5, characterised in that it consists of transverse circular stiffening rings (10) interconnecting all of the stirrups (8) of a same row of tiles, onto which stirrups they are mounted by screws (11) engaged in locknuts (12) borne by the central part of each stirrup (8).

**7.** Heat shield shroud according to Claim 6, characterised in that the stiffening rings (10) comprise a circular downstream wing (10a) bent back towards the inside of the jetpipe so as to form upstream of each ring a diaphragm for pressurising the cooling air.

**8.** Heat shield shroud according to either of Claims 6 or 7 characterised in that it is mounted on the inside of the casing (1) of the jetpipe by means of screws (11) fitted from outside the said jetpipe and locked by captive nuts (12) securely attached to the stirrups (8).

9. Heat shield shroud according to any one of Claims 1 to 8, characterised in that the height of the bosses forming the bridging pieces (5, 50) is calculated with a clearance sufficient to permit expansion in the radial direction of the assembly of the tiles forming the said heat shield shroud.

10. Heat shield shroud according to any one of Claims 1 to 9, characterised in that the width of the stirrup (8) is calculated so as to allow between the said stirrup and the corresponding bridging pieces or pairs of bridging pieces a clearance permitting expansion in the longitudinal direction of the assembly of the tiles forming the said heat shield shroud.

FIG : 1

FIG : 3

FIG : 3a

EP 0 397 566 B1

FIG:2

FIG:4

FIG:5

FIG:6

FIG: 7

FIG: 8

FIG : 9

FIG : 10

FIG : 11